# FASCICULE DE BREVET EUROPEEN

(11) **EP 0 822 631 B1**
(45) Date de publication et mention de la délivrance du brevet: **10.10.2001**
(21) Numéro de dépôt: 97401819.4
(22) Date de dépôt: 29.07.1997
(51) Int. Cl.: H02B 1/40

(54) **Bloc électrique à embrocher sur une patère, en particulier bloc autonome d'éclairage de sécurité**
Elektronische Verbindungsleiste zum Befestigung an einem Träger, insbesondere für autonome Notbeleuchtungsanlage
Electrical connection block to be attached to a bracket, especially for self-contained emergency lighting unit

(30) Priorité: 02.08.1996 FR 9609829
(43) Date de publication de la demande: 04.02.1998
(73) Titulaire: LEGRAND, F-87000 Limoges (FR); LEGRAND SNC, F-87000 Limoges (FR)
(72) Inventeur: Goudal, Jean-Paul, 87000 Limoges (FR); Pourieux, Nicolas, 87270 Couzeix (FR)
(74) Mandataire: CABINET BONNET-THIRION

(56) Documents cités:
- DE-A- 4 428 809
- US-A- 4 706 808

## Description

La présente invention concerne d'une manière générale les blocs électriques, qui, pour leur fixation à un quelconque support, et par exemple à un mur, aussi bien que pour leur alimentation, sont à embrocher sur une patère dûment rapportée sur ce support.

Elle vise plus particulièrement ceux de ces blocs électriques qui comportent un socle creux, qui, à l'arrière, est adapté à être embroché sur la patère et présente une paroi de fond, et qui, à l'avant, est fermé, de manière amovible, par au moins un couvercle, avec, intérieurement, entre la paroi de fond et ce couvercle, au moins un logement dans lequel intervient au moins un organe actif, une borne de connexion par exemple, susceptible de se trouver sous tension lorsque l'ensemble est dûment embroché sur la patère.

Cela est le cas, notamment, de certains blocs autonomes d'éclairage de sécurité.

Pour pallier les conséquences d'une éventuelle défaillance du secteur, ces blocs autonomes d'éclairage de sécurité comportent, intérieurement, dans leur socle creux, une batterie d'accumulateurs, qui, pour son maintien sous charge, est reliée en permanence à des bornes de connexion sous tension.

Lorsque, entre autres interventions de maintenance envisageables, il est nécessaire d'avoir accès à cette batterie d'accumulateurs, en vue par exemple de sa dépose et/ou de son changement, il y a le risque, pour l'opérateur, d'un contact intempestif avec ces bornes de connexion, au détriment de la sécurité.

Dans certaines réalisations, le logement dans lequel est disposée la batterie d'accumulateurs est accessible de l'avant.

Il s'agit, en pratique, d'un logement qui ne s'étend que sur une partie du socle creux, et qui est fermé par un couvercle particulier dont est solidaire une cassette portant la batterie d'accumulateurs, cependant que l'autre partie du socle creux, dans laquelle sont logés d'autres organes, est fermée par un autre couvercle, qui est distinct du précédent, et dont la dépose éventuelle est asservie à celle de celui-ci.

Outre que, pour les raisons exposées, cette disposition ne satisfait pas à la sécurité, elle conduit à la présence de deux couvercles, au détriment des coûts.

Dans d'autres réalisations, le logement dans lequel est disposée la batterie d'accumulateurs n'est accessible que de l'arrière du socle creux, et, pour y avoir accès, il faut au préalable procéder à une dépose de celui-ci, ce qui en induit systématiquement une mise hors tension, au bénéfice de la sécurité.

Mais, pour le maintien de la batterie d'accumulateurs dans son logement, ce logement doit être fermé à l'arrière par un capot particulier, qui, au détriment des coûts, vient en sus du ou des couvercles intervenant à l'avant.

Les documents US-A-4 706 808 et DE-A-4 428 809 décrivent un bloc électrique du genre mentionné ci-dessus.

La présente invention a d'une manière générale pour objet une disposition permettant de satisfaire au moindre coût à la sécurité.

De manière plus précise, elle a pour objet un bloc électrique du genre comportant un socle creux, qui, à l'arrière, est adapté à être embroché sur une patère, tant pour son maintien mécanique que pour son alimentation électrique, et présente une paroi de fond, et qui, à l'avant, est fermé, de manière amovible, par au moins un couvercle, avec, intérieurement, entre ladite paroi de fond et ledit couvercle, au moins un logement dans lequel intervient au moins un organe actif susceptible de se trouver sous tension lorsque le bloc électrique est embroché sur la patère, ce bloc électrique étant d'une manière générale caractérisé en ce que, pour sa fixation au socle creux, le couvercle est équipé d'au moins une patte élastiquement déformable, qui, globalement conformée en crochet, fait saillie sur sa surface interne, et en ce que, conjointement, la paroi de fond du socle creux présente un ajour, qui est propre au passage de la patte élastiquement déformable du couvercle, et à la faveur duquel celle-ci n'est ainsi accessible que de l'arrière du socle creux, avec, sur ce socle creux, pour coopération avec cette patte élastiquement déformable du couvercle, au moins un cran de retenue.

Ainsi, pour la dépose du couvercle nécessaire à l'accès au logement qu'il ferme, il faut intervenir de l'arrière du socle creux, et, donc, procéder au préalable à une dépose de celui-ci, ce qui, conformément à la sécurité, induit systématiquement une mise hors tension de l'ensemble.

Certes, il est déjà connu de prévoir, entre le couvercle et le socle creux, pour le maintien de ce couvercle sur ce socle creux, des moyens d'encliquetage débrayables.

Mais, à la différence de la patte élastiquement déformable suivant l'invention, ces moyens d'encliquetage débrayables sont accessibles de l'avant du socle creux, et, d'ailleurs, pour éviter un éventuel bâillement intempestif du couvercle à sa périphérie, il est prévu d'en disposer, aussi, si désiré, entre le couvercle et le socle creux du bloc électrique suivant l'invention, en parallèle avec la patte élastiquement déformable caractéristique de l'invention et en sus de celle-ci.

Préférentiellement, le socle creux du bloc électrique suivant l'invention comporte, lui-même, pour faciliter la dépose du couvercle, au moins une patte élastiquement déformable, qui, elle aussi conformée en crochet, interfère avec le trajet de la patte élastiquement déformable de ce couvercle lorsque celle-ci est défléchie de la position de verrouillage pour laquelle elle est en prise avec le cran de retenue du socle creux à une position de libération pour laquelle elle échappe à ce cran de retenue, et qui, ainsi, est apte à retenir en position de libération cette patte élastiquement déformable.

Lorsque, après le débrochage du socle creux, il est agi sur la patte élastiquement déformable du couvercle pour faire passer celle-ci de sa position de verrouillage à sa position de libération, la ou les pattes élastiquement déformables du socle creux maintiennent temporairement en position de libération la patte élastiquement déformable du couvercle, à la manière, en quelque sorte, d'une "mémoire" prenant en compte cette position de libération, en sorte qu'il est avantageusement possible, à l'opérateur, de retourner l'ensemble et d'agir de l'avant sur le couvercle pour la dépose de celui-ci sans avoir à concurremment maintenir de l'arrière en position de libération sa patte élastiquement déformable.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un bloc électrique suivant l'invention, en place sur un support ;
la figure 2 est une vue en perspective éclatée qui, déduite de celle de la figure 1, illustre la dépose de ce bloc électrique ;
la figure 3 est, avec un arrachement local, également une vue en perspective éclatée illustrant, en position ouverte, le socle creux que comporte ce bloc électrique et le couvercle qui est associé à ce socle creux ;
la figure 4 reprend, à échelle supérieure, le détail de la figure 3 qui, relatif au socle creux, est repéré par un encart IV sur cette figure 3 ;
la figure 5 reprend, à l'échelle de la figure 4, le détail de la figure 3 qui, relatif au couvercle, est repéré par un encart V sur cette figure 3 ;
la figure 6 est, à échelle encore supérieure, une vue partielle en coupe transversale du socle creux, suivant la ligne VI-VI de la figure 4 ;
la figure 7 est, suivant la même ligne de coupe que celle de la figure 6, mais à une échelle inférieure à celle de celle-ci, une vue en coupe transversale de l'ensemble du socle creux et du couvercle, pour la position de verrouillage de la patte élastiquement déformable prévue suivant l'invention sur ce couvercle ;
la figure 8 est une vue partielle en coupe transversale, qui, reprenant pour partie celle de la figure 7, illustre la position de libération de cette patte élastiquement déformable ;
la figure 9 est, suivant la flèche IX de la figure 8, une vue partielle en élévation de l'arrière de l'ensemble pour cette position de libération.

Ces figures illustrent, à titre d'exemple, l'application de l'invention au cas où le bloc électrique 10 concerné est un bloc autonome d'éclairage de sécurité.

Un tel bloc électrique 10 étant bien connu par lui-même, il ne sera pas décrit dans tous ses détails ici.

Seuls en seront décrits les éléments nécessaires à la compréhension de l'invention.

Dans la forme de réalisation représentée, ce bloc électrique 10 est globalement parallélépipédique et relativement allongé.

Destiné à être rapporté sur un quelconque support 11, par exemple un mur, par l'intermédiaire d'une patère 12, il est, pour l'essentiel, formé, d'une part, d'un socle creux 13, qui porte une ou plusieurs sources d'éclairage, non représentées, et contient des composants, également non représentés, nécessaires à leur desserte, et, d'autre part, une vérine 14 à l'abri de laquelle s'étendent cette ou ces sources d'éclairage.

La patère 12 ne relève pas, par elle-même, de la présente invention, et elle ne sera donc pas décrite dans tous ses détails ici.

Il suffira d'indiquer qu'elle comporte une platine 15, par laquelle elle est adaptée à être rapportée sur le support 11, et, en saillie sur cette platine 15, un bloc 16 sur lequel le bloc électrique 10 doit être embroché par son socle creux 13, tant pour son maintien mécanique que pour son alimentation électrique.

A l'arrière, le socle creux 13 du bloc électrique 10 est donc adapté à être embroché sur la patère 12 ; il présente, pour ce faire, une paroi de fond 18 délimitant une cavité 19, qui, globalement complémentaire du bloc 16 de la patère 12, ouvre sur l'arrière, et par laquelle se fait l'embrochage sur cette patère 12.

Dans la forme de réalisation représentée, cette cavité 19 s'étend dans la zone médiane du socle creux 13, sensiblement à mi-distance de ses extrémités.

La paroi de fond 18 comporte, globalement, cinq panneaux, à savoir, un panneau avant 20, qui, disposé légèrement en retrait par rapport au débouché du socle creux 13, s'étend au droit de la cavité 19 et forme le fond de celle-ci, deux panneaux arrière 21, qui, disposés chacun respectivement de part et d'autre du panneau avant 20, sont décalés par rapport à celui-ci, et deux panneaux de raccordement 22, qui, perpendiculaires à la fois au panneau avant 20 et aux panneaux arrière 21, délimitent latéralement la cavité 19.

A l'avant, le socle creux 13 est fermé, de manière amovible, par au moins un couvercle 23.

Dans la forme de réalisation représentée, seul un couvercle 23 est prévu, et il s'étend donc sur toute la surface du socle creux 13.

En outre, dans cette forme de réalisation, le couvercle 23 présente, en retrait par rapport à sa périphérie, un bord tombé 24 par lequel il est adapté à s'emboîter dans le socle creux 13.

Le socle creux 13 définit, intérieurement, entre sa paroi de fond 18 et le couvercle 23, au moins un logement 25, et, en pratique, disposés chacun respectivement de part et d'autre du panneau avant 20 de cette paroi de fond 18, deux logements 25.

Le panneau avant 20 de la paroi de fond 18 étant en retrait par rapport au débouché du socle creux 13, les deux logements 25 sont en communication l'un avec l'autre à l'avant de ce panneau avant 20, par dessus celui-ci.

Dans l'un au moins des logements 25 intervient au moins un organe actif 26 susceptible de se trouver sous tension.

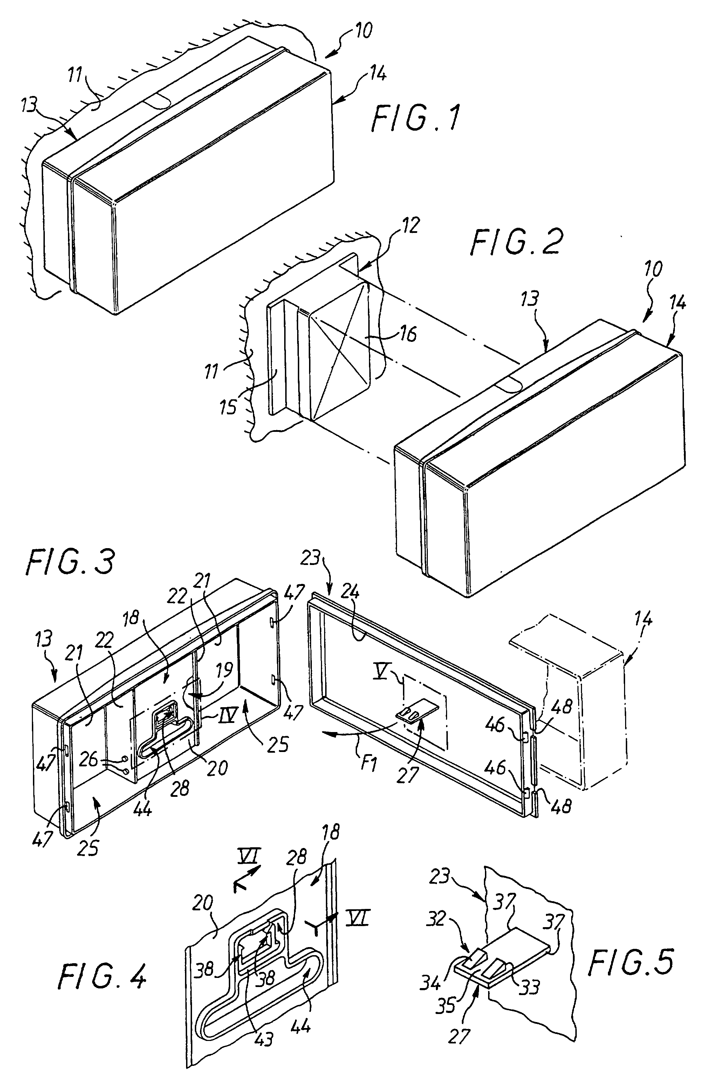

Par exemple, et tel que schématisé sur la figure 3, deux organes actifs 26 se trouvent ainsi présents dans l'un des logements 25.

Il s'agit par exemple de bornes de connexion qui, nécessaires à la desserte d'un quelconque constituant, par exemple une batterie d'accumulateurs, sont en liaison électrique avec des organes de contact, non représentés, aptes à coopérer avec des organes de contact complémentaires, également non représentés, prévus à cet effet sur le bloc 16 de la patère 12.

Les organes de contact ainsi prévus sur la patère 12 étant en permanence sous tension, en étant pour ce faire raccordés au secteur, les organes actifs 26 se trouvent eux-mêmes sous tension lorsque le bloc électrique 10 est embroché sur la patère 12.

Pour des raisons évidentes de sécurité, il importe de faire en sorte qu'un accès aux organes actifs 26 soit interdit lorsqu'ils sont ainsi sous tension.

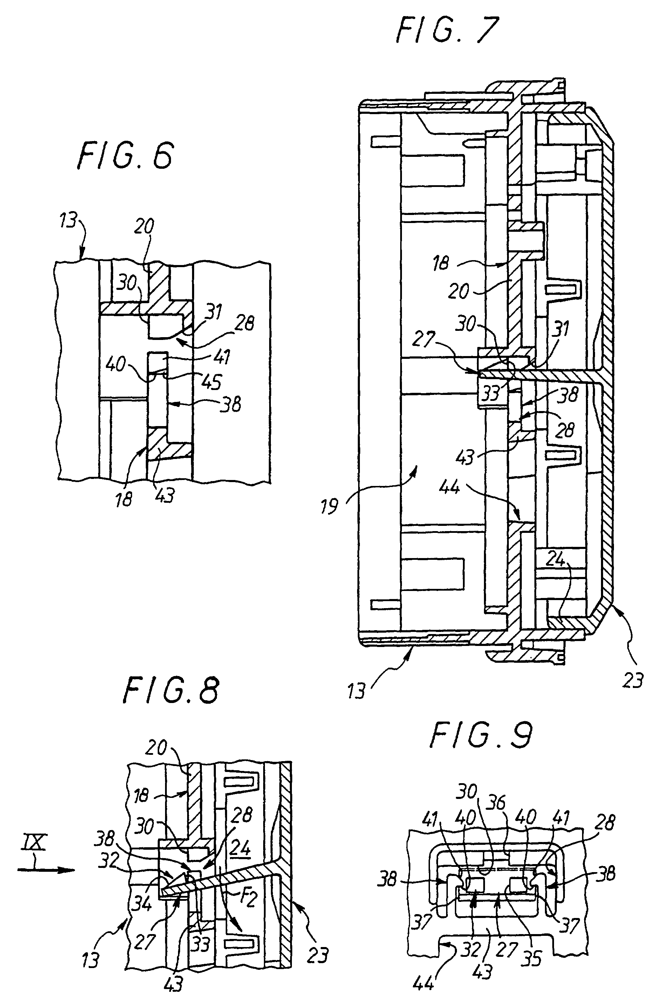

Suivant l'invention, le couvercle 23 est, pour ce faire, équipé, pour sa fixation au socle creux 13, d'au moins une patte élastiquement déformable 27, qui, globalement conformée en crochet, fait saillie sur sa surface interne, et, conjointement, la paroi de fond 18 du socle creux 13 présente un ajour 28, qui est propre au passage de la patte élastiquement déformable 27 du couvercle 23, et à la faveur duquel celle-ci est ainsi accessible de l'arrière du socle creux 13, et seulement de l'arrière de celui-ci, avec, sur ce socle creux 13, pour coopération en retenue avec cette patte élastiquement déformable 27 du couvercle 23, au moins un cran de retenue 30, figures 6 à 9.

Dans la forme de réalisation représentée, le couvercle 23 ne comporte qu'une patte élastiquement déformable 27, et celle-ci s'étend pour lui en pleine surface, c'est-à-dire à distance de sa périphérie.

Plus précisément, dans la forme de réalisation représentée, la patte élastiquement déformable 27 s'étend dans la zone médiane du couvercle 23, au droit de la cavité 19 du socle creux 13.

L'ajour 28 prévu pour son passage dans la paroi de fond 18 du socle creux 13 affecte donc le panneau avant 20 de cette paroi de fond 18, dans la zone médiane de celui-ci.

Dans la forme de réalisation représentée, la patte élastiquement déformable 27 du couvercle 23 s'étend parallèlement aux bords longitudinaux de celui-ci, mais elle pourrait tout aussi bien s'étendre parallèlement à ses bords transversaux, voire même être en oblique par rapport à ces bords longitudinaux et transversaux.

Le cran de retenue 30 prévu sur le socle creux 13 s'étend en bordure de l'ajour 28, sur la face arrière du panneau avant 20 de la paroi de fond 18, et, à l'avant, il est précédé d'un chanfrein oblique d'engagement 31.

Pour coopération avec ce cran de retenue 30, la patte élastiquement déformable 27 du couvercle 23 porte elle-même en saillie un bossage de retenue 32 comportant, lui aussi, un cran de retenue 33 et un chanfrein oblique d'engagement 34.

Dans la forme de réalisation représentée, ce bossage de retenue 32 est fractionné en deux par une échancrure 35 pour le passage éventuel d'un outil, et, en correspondance, le cran de retenue 30 du socle creux 13 est lui-même partagé en deux par une échancrure 36.

Pour des raisons qui apparaîtront ci-après, le bossage de retenue 32 de la patte élastiquement déformable 27 du couvercle 23 s'étend en outre en retrait par rapport aux bords latéraux 37 de cette patte élastiquement déformable 27.

Lorsque, tel que schématisé par une flèche F1 sur la figure 3, le couvercle 23 est amené en position de fermeture sur le socle creux 13, sa patte élastiquement déformable 27 s'engage dans l'ajour 28 de la paroi de fond 18 de ce socle creux 13 et, momentanément défléchie par le chanfrein oblique d'engagement 31, elle reprend, d'elle-même, après franchissement du cran de retenue 30, une position de verrouillage pour laquelle, tel que représenté sur la figure 7, elle est en prise avec ce cran de retenue 30 et assure ainsi le verrouillage du couvercle 23 sur le socle creux 13.

La patte élastiquement déformable 27 n'étant accessible que de l'arrière du socle creux 13, il est nécessaire de procéder au débrochage de celui-ci de la patère 12 avant de pouvoir procéder à une dépose du couvercle 23.

Préférentiellement, et cela est le cas dans la forme de réalisation représentée, le socle creux 13 comporte, lui-même, pour faciliter la dépose du couvercle 23, au moins une patte élastiquement déformable 38, qui, elle aussi conformée en crochet, avec un cran de retenue 40 précédé d'un chanfrein oblique d'engagement 41, interfère avec le trajet de la patte élastiquement déformable 27 du couvercle 23 lorsque, tel que schématisé par une flèche F2 sur la figure 8, celle-ci est défléchie de la position de verrouillage, représentée sur la figure 7, pour laquelle elle est en prise avec le cran de retenue 30 du socle creux 13, à une position de libération, représentée sur la figure 8, pour laquelle elle échappe à ce cran de retenue 30, et qui, ainsi, est apte à retenir en position de libération cette patte élastiquement déformable 27.

Dans la forme de réalisation représentée, la patte élastiquement déformable 38 du socle creux 13 s'étend latéralement par rapport à la patte élastiquement déformable 27 du couvercle 23, pour coopération avec le bord latéral 37 correspondant de celle-ci, et, en pratique, le socle creux 13 comporte, face à face, deux pattes élastiquement déformables 38, pour coopération, chacune respectivement, avec les deux bords latéraux 37 de la patte élastiquement déformable 27 du couvercle 23.

Du fait que le bossage de retenue 32 de la patte élastiquement déformable 27 du couvercle 23 s'étend en retrait par rapport aux bords latéraux 37 de celle-ci, les pattes élastiquement déformables 38 du socle creux 13 ne risquent pas d'interférer intempestivement avec ce bossage de retenue 32.

Dans la forme de réalisation représentée, les pattes élastiquement déformables 38 du socle creux 13 s'étendent à la faveur de l'ajour 28 de la paroi de fond 18 de celui-ci.

Plus précisément, dans cette forme de réalisation, ces pattes élastiquement déformables 38 font saillie sur une traverse 43 qui sépare cet ajour 28 d'un ajour 44, plus allongé, prévu par ailleurs dans le panneau avant 20 de la paroi de fond 18 pour l'intervention des éléments de contact devant assurer la connexion électrique avec la patère 12, ces éléments de contact étant par exemple des éléments d'embrochage.

Quoi qu'il en soit, lorsque, le socle creux 13 ayant été débroché de la patère 12, il est agi de l'arrière sur la patte élastiquement déformable 27 du couvercle 23 pour l'amener dans la position de libération pour laquelle elle est en prise avec les pattes élastiquement déformables 38 de ce socle creux 13, il est possible de retourner ce socle creux 13 et d'agir de l'avant sur le couvercle 23 pour la dépose de celui-ci, sans qu'il soit autrement nécessaire de continuer à agir sur la patte élastiquement déformable 27 de ce couvercle 23.

Lorsque le couvercle 23 est ainsi déposé, sa patte élastiquement déformable 27 glisse au contact des crans de retenue 40 des pattes élastiquement déformables 38 du socle creux 13, tout en étant maintenue défléchie par celles-ci, jusqu'à ce que, échappant à ces pattes élastiquement déformables 38, elle puisse retrouver par élasticité sa configuration initiale.

Mais, ayant au préalable également franchi le cran de retenue 30 du socle creux 13, elle échappe à celui-ci, tout en étant à nouveau à même de venir en prise avec ce cran de retenue 30 lors de la remise en place ultérieure du couvercle 23 sur le socle creux 13.

Dans la forme de réalisation représentée, et ainsi qu'il est mieux visible sur la figure 6, le cran de retenue 40 des pattes élastiquement déformables 38 du socle creux 13 est abattu par un chanfrein 45, qui, pour une adaptation au profil de la patte élastiquement déformable 27 du couvercle 23 lorsque celle-ci est défléchie, s'étend en oblique par rapport à la racine de ces pattes élastiquement déformables 38, en allant en s'épanouissant du bord extérieur de ces pattes élastiquement déformables 38 au bord intérieur de celles-ci.

Dans la forme de réalisation représentée, il est par ailleurs prévu, au moins localement, à la périphérie du couvercle 23, et de manière connue en soi, des moyens d'encliquetage débrayables 46 propres à assurer un placage correct du couvercle 23 sur le socle creux 13.

Par exemple, et tel que représenté, il s'agit de crochets qui, présents en saillie sur le bord tombé 24, le long de la tranche de celui-ci, sont destinés à coopérer avec des ouvertures 47 prévues en correspondance sur le socle creux 13.

Mais, à la différence de la patte élastiquement déformable 27, ces moyens d'encliquetage débrayables 46 sont accessibles de l'avant, à la faveur d'échancrures 48 affectant, à cet effet, à leur droit, la périphérie du couvercle 23.

Bien entendu, la présente invention ne se limite pas à la forme de réalisation décrite et représentée, mais englobe toute variante d'exécution.

En outre, bien qu'elle soit plus précisément prévue pour des blocs autonomes d'éclairage de sécurité, son domaine d'application ne se limite pas forcément à de tels blocs autonomes d'éclairage de sécurité, mais peut aussi bien s'étendre à tout bloc électrique, et par exemple à des blocs d'alarme, qui sont à rapporter sur une patère, et qui comportent intérieurement des organes actifs susceptibles de se trouver sous tension.

## Revendications

1. Bloc électrique du genre comportant un socle creux (13), qui, à l'arrière, est adapté à être embroché sur une patère (12), tant pour son maintien mécanique que pour son alimentation électrique, et présente une paroi de fond (18), et qui, à l'avant, est fermé, de manière amovible, par au moins un couvercle (23), avec, intérieurement, entre la paroi de fond (18) et le couvercle (23), au moins un logement (25) dans lequel intervient au moins un organe actif (26) susceptible de se trouver sous tension lorsque le bloc électrique est embroché sur la patère (12), **caractérisé en ce que**, pour sa fixation au socle creux (13), le couvercle (23) est équipé d'au moins une patte élastiquement déformable (27), qui, globalement conformée en crochet, fait saillie sur sa surface interne, et **en ce que**, conjointement, la paroi de fond(18)du socle creux (13) présente un ajour (28), qui est propre au passage de la patte élastiquement déformable (27) du couvercle (23), et à la faveur duquel celle-ci n'est ainsi accessible que de l'arrière du socle creux (13), avec, sur ce socle creux (13), pour coopération avec cette patte élastiquement déformable (27) du couvercle (23), au moins un cran de retenue (30).

2. Bloc électrique suivant la revendication 1, **caractérisé en ce que** le socle creux (13) comporte lui-même au moins une patte élastiquement déformable (38), qui, elle aussi conformée en crochet, interfère avec le trajet de la patte élastiquement déformable (27) du couvercle (23) lorsque celle-ci est défléchie d'une position de verrouillage pour laquelle elle est en prise avec le cran de retenue (30) du socle creux (13) à une position de libération pour laquelle elle échappe à ce cran de retenue (30), et qui, ainsi, est apte à retenir en position de libération cette patte élastiquement déformable (27).

3. Bloc électrique suivant la revendication 2, **caractérisé en ce que** la patte élastiquement déformable (38) du socle creux (13) s'étend à la faveur de l'ajour (28) de la paroi de fond (18) de celui-ci.

4. Bloc électrique suivant l'une quelconque des revendications 2, 3, **caractérisé en ce que** la patte élastiquement déformable (38) du socle creux (13) s'étend latéralement par rapport à la patte élastiquement déformable (27) du couvercle (23), pour coopération avec le bord latéral (37) correspondant de cette patte élastiquement déformable (27), et, la patte élastiquement déformable (27) du couvercle (23) portant elle-même en saillie un bossage de retenue (32), ce bossage de retenue (32) s'étend en retrait par rapport à son bord latéral (37) correspondant.

5. Bloc électrique suivant l'une quelconque des revendications 2 à 4, **caractérisé en ce que**, la patte élastiquement déformable (38) du socle creux (13) comportant un cran de retenue (40), ce cran de retenue (40) est abattu par un chanfrein (45) qui s'étend en oblique par rapport à la racine de cette patte élastiquement déformable (38) en allant en s'épanouissant du bord extérieur de cette patte élastiquement déformable (38) à son bord intérieur.

6. Bloc électrique suivant l'une quelconque des revendications 4, 5, **caractérisé en ce que** le socle creux (13) comporte, face à face, deux pattes élastiquement déformables (38), pour coopération, chacune respectivement, avec les bords latéraux (37) de la patte élastiquement déformable (27) du couvercle (23).

7. Bloc électrique suivant l'une quelconque des revendications 1 à 6, **caractérisé en ce que** le cran de retenue (30) que comporte le socle creux (13) pour coopération en retenue avec la patte élastiquement déformable (27) du couvercle (23) s'étend en bordure de l'ajour (28) de sa paroi de fond (18), et ce cran de retenue (30) est précédé d'un chanfrein oblique d'engagement (31).

8. Bloc électrique suivant l'une quelconque des revendications 1 à 7, **caractérisé en ce que**, la paroi de fond (18) du socle creux (13) délimitant une cavité (19), qui ouvre sur l'arrière, et par laquelle se fait l'embrochage de ce socle creux (13) sur la patère (12), la patte élastiquement déformable (27) du couvercle (23) s'étend au droit de cette cavité (19).

9. Bloc électrique suivant l'une quelconque des revendications 1 à 8, **caractérisé en ce que** la patte élastiquement déformable (27) du couvercle (23) s'étend en pleine surface pour celui-ci, à distance de sa périphérie.

10. Bloc électrique suivant l'une quelconque des revendications 1 à 9, **caractérisé en ce que** la patte élastiquement déformable (27) du couvercle (23) n'est accessible que de l'arrière du socle creux (13).

11. Bloc électrique suivant l'une quelconque des revendications 9, 10 **caractérisé en ce que** le couvercle (23) ne comporte qu'une patte élastiquement déformable (27).

12. Bloc électrique suivant l'une quelconque des revendications 1 à 11, **caractérisé en ce que** le couvercle (23) s'étend sur toute la surface du socle creux (13).

## Patentansprüche

1. Elektrischer Block mit einem hohlen Sockel (13), der auf. der Rückseite dafür ausgebildet ist, sowohl für seinen mechanischen Halt, als auch für seine elektrische Versorgung auf eine Halterung (12) aufgesteckt zu werden, und eine Bodenwand (18) aufweist und der vorne durch mindestens einen Deckel (23) abnehmbar verschlossen ist, wobei innen zwischen der Bodenwand (18) und dem Deckel (23) mindestens eine Aufnahme (25) vorgesehen ist, in der mindestens ein aktives Organ (26) angeordnet ist, das unter Spannung stehen kann, wenn der elektrische Block auf die Halterung (12) aufgesteckt ist, **dadurch gekennzeichnet, dass** der Deckel (23) für seine Befestigung auf dem hohlen Sockel (13) mit mindestens einem elastisch verformbaren Lappen (27) versehen ist, der allgemein als Haken ausgebildet ist und auf der Innenseite des Deckels vorsteht, und dass die Bodenwand (18) des hohlen Sockels (13) gleichzeitig eine Öffnung (28) besitzt, die den Durchgang des elastisch verformbaren Lappens (27) des Deckels (23) gestattet und in der dieser Lappen nur von der Rückseite des hohlen Sockels (13) aus zu-gänglich ist, wobei auf dem hohlen Sockel (13) zum Zusammenwirken mit diesem elastisch verformbaren Lappen (27) des Deckels (23) mindestens eine Rückhalteraste (30) vorgesehen ist.

2. Elektrischer Block nach Anspruch 1, **dadurch gekennzeichnet, dass** der hohle Sockel (13) selbst mindestens einen elastisch verformbaren Lappen (38) aufweist, der ebenfalls hakenförmig ausgebildet ist und in den Weg des elastisch verformbaren Lappens (27) des Deckels (23) tritt, wenn dieser aus der Verriegelungsstellung, in der er mit der Rückhalteraste (30) des hohlen Sockels (13) in Eingriff steht, in eine Freigabestellung abgelenkt ist, in der er diese Rückhalteraste (30) verlässt, und der auf diese Weise in der Lage ist, diesen elastisch verformbaren Lappen (27) in der Freigabestellung zu halten.

3. Elektrischer Block nach Anspruch 2, **dadurch gekennzeichnet, dass** der elastisch verformbare Lappen (38) des hohlen Sockels (13) sich in der Öffnung (28) der Bodenwand (18) dieses Sockels erstreckt.

4. Elektrischer Block nach einem der Ansprüche 2, 3, **dadurch gekennzeichnet, dass** der elastisch verformbare Lappen (38) des hohlen Sockels (13) sich bezüglich des elastisch verformbaren Lappens (27) des Deckels (23) seitlich erstreckt, um mit dem entsprechenden Seitenrand (37) dieses elastisch verformbaren Lappens (27) zusammenzuwirken, und der elastisch verformbare Lappen (27) des Deckels (23) seinerseits eine vorstehende Rückhaltenase (32) aufweist, die sich bezüglich seines entsprechenden Seitenrands (37) zurückversetzt erstreckt.

5. Elektrischer Block nach einem der Ansprüche 2 bis 4, **dadurch gekennzeichnet, dass** der elastisch verformbare Lappen (38) des hohlen Sockels (13) eine Rückhalteraste (40) aufweist und diese Rückhalteraste (49) mit einer Abschrägung (45) versehen ist, die sich zur Wurzel dieses elastisch verformbaren Lappens (38) schräg erstreckt, indem sie sich vom Außenrand dieses elastisch verformbaren Lappens (38) zu dessen Innenrand hin erweitert.

6. Elektrischer Block nach einem der Ansprüche 4, 5 **dadurch gekennzeichnet, dass** der hohle Sockel (13) einander gegenüberstehend zwei elastisch verformbare Lappen (38) aufweist, die jeweils mit einem der Seitenränder (37) des Deckels (23) zusammenwirken.

7. Elektrischer Block nach einem der Ansprüche 1 bis 6, **dadurch gekennzeichnet, dass** die Rückhalteraste (30), die der hohle Sockel (13) zum zurückhaltenden Zusammenwirken mit dem elastisch verformbaren Lappen (27) des Deckels (23) aufweist, sich am Rand der Öffnung (28) der Bodenwand (18) des Sockels erstreckt, und dieser Rückhalteraste (30) eine Einführungsschräge (31) vorhergeht.

8. Elektrischer Block nach einem der Ansprüche 1 bis 7, **dadurch gekennzeichnet, dass** die Bodenwand (18) des hohlen Sockels (13) einen Hohlraum (19) abgrenzt, der nach hinten offen ist und über den der hohle Sockel (13) auf die Halterung (12) aufgesteckt wird, und dass der elastisch verformbare Lappen (27) des Deckels sich auf Höhe dieses Hohlraums (19) erstreckt.

9. Elektrischer Block nach einem der Ansprüche 1 bis 8, **dadurch gekennzeichnet, dass** der elastisch verformbare Lappen (27) des Deckels (23) sich mitten auf der Fläche des Dek-kels in einem Abstand von seinem Umfang erstreckt.

10. Elektrischer Block nach einem der Ansprüche 1 bis 9, **dadurch gekennzeichnet, dass** der elastisch verformbare Lappen (27) des Deckels (23) nur von der Rückseite des hohlen Sockels (13) aus zugänglich ist.

11. Elektrischer Block nach einem der Ansprüche 9, 10, **dadurch gekennzeichnet, dass** der Deckel (23) nur einen elastisch verformbaren Lappen (27) aufweist.

12. Elektrischer Block nach einem der Ansprüche 1 bis 11, **dadurch gekennzeichnet, dass** der Deckel (23) sich über die ganze Oberfläche des hohlen Sockels (13) erstreckt.

## Claims

1. An electrical unit of the type comprising a hollow base (13) which at the rear is adapted to be mounted on to a mounting projection (12) both for mechanically holding it in position and for the electrical power supply thereto, and has a back wall (18) and which at the front is closed removably by at least one cover (23) with internally between the back wall (18) and the cover (23) at least one housing (25) in which there is operatively disposed at least one active member (26) which can carry voltage when the electrical unit is mounted on the mounting projection (12), **characterised in that**, for its fixing to the hollow base (13), the cover (23) is equipped with at least one elastically deformable tongue (27) which, being generally hook-shaped, projects on its internal surface, and that conjointly the back wall (18) of the hollow base (13) has an opening (28) which is suitable for the passage therethrough of said elastically deformable tongue (27) of the cover (23) and by way of which the tongue is thus accessible only from the back of the hollow base (13), with at least one retaining catch (30) on said hollow base (13) for co-operating with said elastically deformable tongue (27) of the cover (23).

2. An electrical unit according to claim 1 **characterised in that** the hollow base (13) itself comprises at least one elastically deformable tongue (38) which, also being hook-shaped, interferes with the path of movement of the elastically deformable tongue (27) of the cover (23) when the latter is deflected from a locking position in which it is in engagement with the retaining catch (30) of the hollow base (13) to a liberation position in which it escapes said retaining catch (30) and which thus is capable of retaining said elastically deformable tongue (27) in the liberation position.

3. An electrical unit according to claim 2 **characterised in that** the elastically deformable tongue (38) of the hollow base (13) extends by way of the opening (28) in the back wall (18) thereof.

4. An electrical unit according to either one of claims 2 and 3 **characterised in that** the elastically deformable tongue (38) of the hollow base (13) extends laterally with respect to the elastically deformable tongue (27) of the cover (23) for co-operating with the corresponding lateral edge (37) of said elastically deformable tongue (27) and, the elastically deformable tongue (27) of the cover (23) itself bearing in projecting relationship a retaining boss (32), said retaining boss (32) extends in set-back relationship with respect to its corresponding lateral edge (37).

5. An electrical unit according to any one of claims 2 to 4 **characterised in that**, the elastically deformable tongue (38) of the hollow base (13) comprising a retaining catch (40), said retaining catch (40) is bevelled by a chamfer (45) which extends inclinedly with respect to the base of said elastically deformable tongue (38), extending in an expanding configuration from the outside edge of said elastically deformable tongue (38) to its inside edge.

6. An electrical unit according to either one of claims 4 and 5 **characterised in that** the hollow base (13) comprises in mutually facing relationship two elastically deformable tongues (38) for each co-operating respectively with the lateral edges (37) of the elastically deformable tongue (27) of the cover (23).

7. An electrical unit according to any one of claims 1 to 6 **characterised in that** the retaining catch (30) that the hollow base (13) comprises for retaining co-operation with the elastically deformable tongue (27) of the cover (23) extends at the edge of the opening (28) in its back wall (18) and said retaining catch (30) is preceded by an inclined engagement chamfer (31).

8. An electrical unit according to any one of claims 1 to 7 **characterised in that**, the back wall (18) of the hollow base (13) delimiting a cavity (19) which opens to the rear and by way of which said hollow base (13) is mounted on the mounting projection (12), the elastically deformable tongue (27) of the cover (23) extends in line with said cavity (19).

9. An electrical unit according to any one of claims 1 to 8 **characterised in that** the elastically deformable tongue (27) of the cover (23) extends right on the surface thereof at a spacing from its periphery.

10. An electrical unit according to any one of claims 1 to 9 **characterised in that** the elastically deformable tongue (27) of the cover (23) is accessible only from the rear of the hollow base (13).

11. An electrical unit according to either one of claims 9 and 10 **characterised in that** the cover (23) comprises only one elastically deformable tongue (27).

12. An electrical unit according to any one of claims 1 to 11 **characterised in that** the cover (23) extends over the entire surface of the hollow base (13).
